(19)

Europäisches
Patentamt
European
Patent Office
Office européen
des brevets

(11) **EP 3 451 283 A1**

(12) **EUROPEAN PATENT APPLICATION**

(43) Date of publication:
06.03.2019 Bulletin 2019/10

(51) Int Cl.:
*G06T 5/20* (2006.01)          *H04N 1/405* (2006.01)

(21) Application number: 18154022.0

(22) Date of filing: 30.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 30.08.2017 CN 201710760887

(71) Applicants:
• XYZprinting, Inc.
New Taipei City 22201 (TW)

• Kinpo Electronics, Inc.
New Taipei City 22201 (TW)

(72) Inventors:
• Hsieh, Hsin-Ta
22201 New Taipei City (TW)
• Huang, Yu-Ting
22201 New Taipei City (TW)
• Shih, Ko-Wei
22201 New Taipei City (TW)

(74) Representative: 2K Patentanwälte Blasberg
Kewitz & Reichel
Partnerschaft mbB
Schumannstrasse 27
60325 Frankfurt am Main (DE)

(54) **INKJET METHOD AND THREE-DIMENSIONAL PRINTING DEVICE**

(57) An inkjet method adapting to a three-dimensional printing device is provided. The inkjet method includes following steps: judging whether a first reference pixel value of a first reference pixel in a first reference image is greater than or equal to a preset threshold value to determine a first pixel value of a first pixel in a first inkjet image (S510); generating a weight value corresponding to a second reference pixel according to number of the second reference pixel adjacent to the first reference pixel in the first reference image and a second reference image (S520); and adjusting a second reference pixel value of the second reference pixel in the first reference image and the second reference image according to the first reference pixel value, the first pixel value, and the weight value (S530). In addition, the above three-dimensional printing device is also provided.

```
┌─────────────────────────────────────────────┐
│ Judging whether a first reference pixel value │
│ of a first reference pixel in a first          │
│ reference image is greater than or equal to a  │─── S510
│ preset threshold value to determine a first    │
│ pixel value of a first pixel in a first inkjet │
│ image                                          │
└─────────────────────────────────────────────┘
                      ↓
┌─────────────────────────────────────────────┐
│ According to number of at least one second     │
│ reference pixel adjacent to the first reference│
│ pixel in at least one of the first reference   │─── S520
│ image and a second reference image, generating │
│ at least one weight value corresponding to the │
│ at least one second reference pixel            │
└─────────────────────────────────────────────┘
                      ↓
┌─────────────────────────────────────────────┐
│ According to the first reference pixel value,  │
│ the first pixel value and the at least one     │
│ weight value, adjusting at least one second    │─── S530
│ reference pixel value of the at least one       │
│ second reference pixel in the at least one of   │
│ the first reference image and the second        │
│ reference image                                 │
└─────────────────────────────────────────────┘
```

**FIG. 5**

EP 3 451 283 A1

**Description**

BACKGROUND

Technical Field

The technical field relates to an inkjet technique, and more particularly, to an inkjet method and a three-dimensional printing device.

Description of Related Art

Along with advances in computer-aided manufacturing (CAM), the manufacturing industry has developed three-dimensional printing technology capable of rapidly fabricating products from an original design concept. Three-dimensional printing technology is actually a generic term for a series of rapid prototyping (RP) techniques. A basic principle thereof is laminate manufacturing on a printing platform, wherein an RP machine sequentially prints, on the printing platform, a plurality of layer objects within a horizontal plane through scanning, so that the layer objects can be stacked to form a three-dimensional printed object.

Moreover, current three-dimensional printing technology further includes performing an inkjet operation on the three-dimensional printed object. That is, when a three-dimensional printing device prints the layer objects, it can at the same time perform the inkjet operation on each of the layer objects. However, in the inkjet operation of the three-dimensional printing device, whether or not to perform the inkjet operation on positions in the layer objects that correspond to a plurality of pixels of an inkjet image is determined according to pixel values of the pixels. Thus, if an image which a user inputs to the three-dimensional printing device is a reference image having higher resolution, the three-dimensional printing device may not be able to perform the inkjet operation according to this reference image. Alternatively, in another case, due to a difference between an inkjet resolution of the three-dimensional printing device and the resolution of the reference image, an object image of the three-dimensional printed object after the inkjet operation may be seriously distorted. In view of the above, several exemplary embodiments are proposed to overcome the problems.

SUMMARY

The disclosure provides an inkjet method and a three-dimensional printing device, in which an inkjet image is generated according to a reference image, so that the three-dimensional printing device can accurately perform an inkjet operation on a three-dimensional printed object.

An inkjet method of the disclosure is adapted to a three-dimensional printing device. The three-dimensional printing device includes a processor, a storage device and an inkjet head. The storage device stores a first reference image and a second reference image. The first reference image and the second reference image are two adjacent layer images obtained by horizontally slicing a three-dimensional model. The inkjet method includes the following steps. By the processor, whether a first reference pixel value of a first reference pixel in the first reference image is greater than or equal to a preset threshold value is judged to determine a first pixel value of a first pixel in a first inkjet image. By the processor, according to number of at least one second reference pixel adjacent to the first reference pixel in at least one of the first reference image and the second reference image, at least one weight value corresponding to the at least one second reference pixel is generated. By the processor, according to the first reference pixel value, the first pixel value and the at least one weight value, at least one second reference pixel value of the at least one second reference pixel in the at least one of the first reference image and the second reference image is adjusted.

A three-dimensional printing device of the disclosure includes a storage device, a processor and an inkjet head. The storage device is configured to store a plurality of modules, a first reference image and a second reference image. The first reference image and the second reference image are two adjacent layer images obtained by horizontally slicing a three-dimensional model. The processor is coupled to the storage device. The processor is configured to execute the plurality of modules. The inkjet head is coupled to the processor. The inkjet head is configured to perform an inkjet operation on a three-dimensional printed object. The processor judges whether a first reference pixel value of a first reference pixel in the first reference image is greater than or equal to a preset threshold value to determine a first pixel value of a first pixel in a first inkjet image. According to number of at least one second reference pixel adjacent to the first reference pixel in at least one of the first reference image and the second reference image, the processor generates at least one weight value corresponding to the at least one second reference pixel. According to the first reference pixel value, the first pixel value and the at least one weight value, the processor adjusts at least one second reference pixel value of the at least one second reference pixel in the at least one of the first reference image and the second reference image.

Based on the above, in the inkjet method and the three-dimensional printing device according to the disclosure, each pixel of a plurality of reference images is analyzed and sequentially adjusted by an error diffusion method so as to accurately generate a plurality of corresponding inkjet images. Accordingly, the three-dimensional printing device according to the disclosure is capable of accurately performing an inkjet operation on a three-dimensional printed object according to the inkjet images.

To make the above features and advantages of the disclosure more comprehensible, several embodiments accompanied with drawings are described in detail as follows.

BRIEF DESCRIPTION OF THE DRAWINGS

FIG. 1 is a block diagram of a three-dimensional printing device according to an exemplary embodiment.
FIG. 2 is a schematic view of the three-dimensional printing device according to the exemplary embodiment of FIG. 1.
FIG. 3A is a schematic view of a plurality of reference images according to an exemplary embodiment.
FIG. 3B is a schematic view of a first reference image and a second reference image according to an exemplary embodiment.
FIG. 3C is a schematic view of an inkjet image according to an exemplary embodiment.
FIG. 4A is a schematic view of a plurality of inkjet images according to an exemplary embodiment.
FIG. 4B is a schematic view showing that a reference image is converted into an inkjet image according to an exemplary embodiment.
FIG. 5 is a flowchart of an inkjet method according to an exemplary embodiment.

DESCRIPTION OF THE EMBODIMENTS

In order to make the disclosure more comprehensible, exemplary embodiments are described below as the examples to demonstrate that the disclosure can actually be realized. Moreover, wherever appropriate in the drawings and embodiments, elements/components/steps with the same reference numerals represent the same or similar parts.

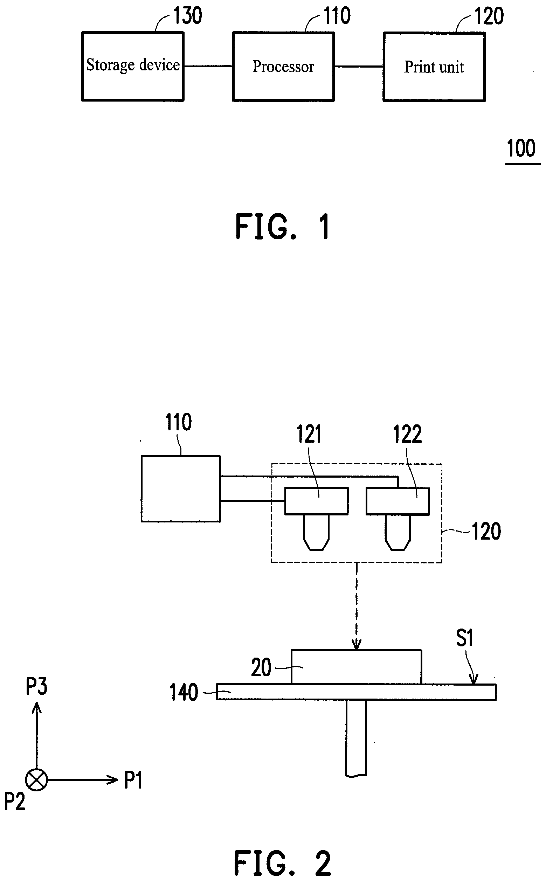

FIG. 1 illustrates a schematic view of a three-dimensional printing device according to an exemplary embodiment. Referring to FIG. 1, a three-dimensional printing device 100 includes a processor 110, a print unit 120 and a storage device 130. The processor 110 is coupled to the print unit 120 and the storage device 130. In the present exemplary embodiment, the processor 110 is configured to operate the print unit 120 to perform a three-dimensional printing operation. In the present exemplary embodiment, the print unit 120 may include a print head, an inkjet head, a driver and so on. For example, the print head is configured to print out a three-dimensional printed object on a printing platform, and the inkjet head is configured to perform an inkjet operation on the three-dimensional printed object. In the present exemplary embodiment, the print unit 120 may further include, for example, other members for completing the three-dimensional printing and the inkjet operation in cooperation with the print head, the inkjet head and the driver, wherein the other members include, for example, a controller, a heating module, a supply pipeline or a linking mechanism and so on. Moreover, the relevant members will not be described in detail herein since sufficient teachings, suggestions and implementation manners thereof can be obtained from common knowledge in this field.
In the present exemplary embodiment, the processor 110 may include a processing chip, an image processing chip, or, for example, a central processing unit (CPU), or a programmable general purpose or special purpose microprocessor, a digital signal processor (DSP), a programmable controller, an application specific integrated circuit (ASIC), a programmable logic device (PLD), other similar processing circuit or a combination of the foregoing devices.
In the present exemplary embodiment, the storage device 130 may be, for example, a dynamic random access memory (DRAM), a flash memory, or a non-volatile random access memory (NVRAM) or the like. In the present exemplary embodiment, the storage device 130 may, for example, store an image editing module, an operation module, image data and so on, so that the processor 110 can read or execute the modules and image data to realize an inkjet method described in the exemplary embodiments of the disclosure. In the present exemplary embodiment, the storage device 130 further stores a plurality of reference images, the reference images being a plurality of adjacent layer images obtained by horizontally slicing a three-dimensional model.
In the present exemplary embodiment, when the three-dimensional printing device 100 completes printing of a certain layer object of the three-dimensional printed object, the three-dimensional printing device 100 reads a corresponding inkjet image to continue to perform the inkjet operation on this layer object. In the present exemplary embodiment, the three-dimensional printing device 100 performs the inkjet operation in such a manner that, according to whether a pixel value of each pixel position in the inkjet image is 1 or 0, the three-dimensional printing device 100 judges whether to perform the inkjet operation on a corresponding position on the three-dimensional printed object or not. However, in the present exemplary embodiment, since a resolution of the reference images received by the three-dimensional printing device 100 may be higher than an inkjet resolution of the three-dimensional printing device 100,

the three-dimensional printing device 100 analyzes and adjusts the reference images in advance to acquire a plurality of corresponding inkjet images. That is, in the present exemplary embodiment, the three-dimensional printing device 100 is configured to convert the externally input reference images into the inkjet images having the inkjet resolution applicable to the three-dimensional printing device 100. In addition, in the present exemplary embodiment, the inkjet image may be, for example, a binary image. Hence, the three-dimensional printing device 100 may clearly judge whether or not to perform the inkjet operation according to a pixel value (1 or 0) of each pixel position of the inkjet image.

FIG. 2 is a schematic view of the three-dimensional printing device according to the exemplary embodiment of FIG. 1. Referring to FIG. 1 and FIG. 2, in the present exemplary embodiment, the three-dimensional printing device 100 is, for example, placed in a space formed by a first direction PI, a second direction P2 and a third direction P3, wherein the first direction PI, the second direction P2 and the third direction P3 are perpendicular to one another. In the present exemplary embodiment, the processor 110 is coupled to the print unit 120, wherein the print unit 120 includes a print head 121 and an inkjet head 122. In the present exemplary embodiment, the print head 121 is configured to perform the three-dimensional printing operation on a carrying surface S1 (parallel to a plane formed by the first direction P1 and the second direction P2) of a printing platform 140, so as to print a three-dimensional printed object 20. The inkjet head 122 is configured to perform the inkjet operation on the three-dimensional printed object 20. For example, first of all, the processor 110 controls a moving path of the print head 121 according to a plurality of layer images of the three-dimensional model, and operates the print head 121 to print a layer object on the carrying surface S1 of the printing platform 140, wherein the layer images are two-dimensional image files. Next, the processor 110 analyzes a plurality of reference images to generate a plurality of corresponding inkjet images, and the processor 110 determines whether or not to perform the inkjet operation by the inkjet head 122 on the corresponding layer object according to the inkjet images.

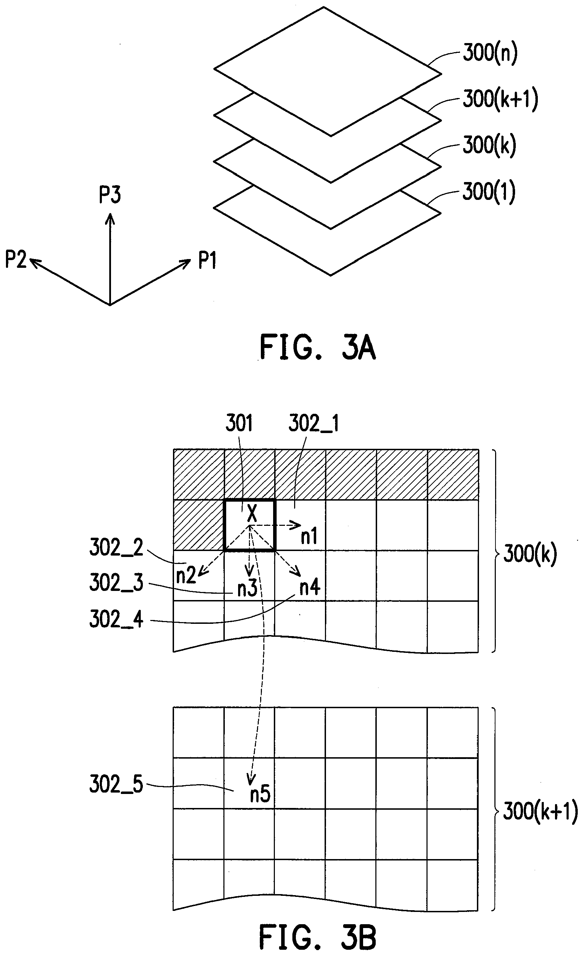

FIG. 3A is a schematic view of a plurality of reference images according to an exemplary embodiment. Referring to FIG. 3A, in the present exemplary embodiment, a plurality of reference images 300(1) to 300(n) respectively correspond to respective layer objects of the three-dimensional printed object 20, wherein n is a positive integer greater than 0. In the present exemplary embodiment, the reference images 300(1) to 300(n) may, for example, respectively have a pixel change at an edge of the images, or respectively have a pixel change over the whole area of the images. The disclosure is not limited thereto. For example, since the three-dimensional printed object 20 only needs to show a color on its outer shell, the reference images 300(1) to 300(k+1) may respectively have a pixel change only at the edge of the images. However, the reference image 300(n) is on the top layer of the three-dimensional printed object 20, and therefore has a pixel change over the whole area of the image.

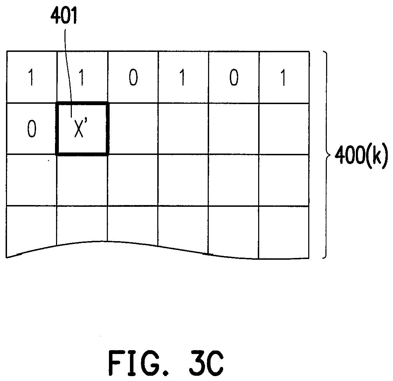

FIG. 3B is a schematic view of a first reference image and a second reference image according to an exemplary embodiment. FIG. 3C is a schematic view of an inkjet image according to an exemplary embodiment. Referring to FIG. 2 to FIG. 3C, two of the reference images 300(1) to 300(n), the reference images 300(k) and 300(k+1), are described for exemplary purposes, wherein k is between 1 and n. In the present exemplary embodiment, the reference images 300(k) and 300(k+1) are two adjacent layer images obtained by horizontally slicing a three-dimensional model. In the present exemplary embodiment, the processor 110 analyzes the reference image 300(k) according to a predetermined order. In the present exemplary embodiment, the predetermined order may be, for example, from the reference image 300(1) to the reference image 300(n), and the analysis is performed (from left to right and from top to down) on each pixel of the first row to the last row of each of the reference images 300(1) to 300(n). However, the disclosure is not limited thereto. Moreover, the processor 110 of the present exemplary embodiment further uses an error diffusion method to adjust a pixel value of each pixel of the reference images 300(1) to 300(n).

Specifically, FIG. 3C indicates that the processor 110 sequentially analyzes each pixel of the reference image 300(k), wherein the pixels marked with slant lines in the reference image 300(k) in FIG. 3B indicate that these pixels have been analyzed and corresponding pixel values (e.g., 1, 1, 0, 1, 0, 1, and 0, in sequence) in an inkjet image 400(k) have been acquired. In the present exemplary embodiment, when the processor 110 analyzes a reference pixel 301 in the reference image 300(k), the processor 110 judges whether a reference pixel value X of the reference pixel 301 in the reference image 300(k) is greater than or equal to a preset threshold value, so as to determine a pixel value X' of a pixel 401 in the inkjet image 400(k). In the present exemplary embodiment, the preset threshold value may be, for example, 0.5. Therefore, the processor 110 may execute the following formula (1).

$$X' = \begin{cases} 1, X \geq 0.5 \\ 0, X < 0.5 \end{cases} \quad \text{.....................Formula (1)}$$

Next, according to the number of a plurality of reference pixels 302_1 to 302_5 adjacent to the reference pixel 301 in the reference images 300(k) and 300(k+1), the processor 110 generates a plurality of weight values corresponding to the reference pixels 302_1 to 302_5. That is, since the number of the reference pixels 302_1 to 302_5 is five, the processor 110 establishes two error diffusion matrices as shown by the following formula (2) and formula (3).

$$\begin{bmatrix} 0 & 0 & 7/21 \\ 3/21 & 5/21 & 1/21 \end{bmatrix}$$ ....................Formula (2)

$$\begin{bmatrix} 0 & 5/21 & 0 \\ 0 & 0 & 0 \end{bmatrix}$$ ....................Formula (3)

In the present exemplary embodiment, the magnitude and number of the weight values in the error diffusion matrices of the above formulae (2) and (3) may be designed by developing an error diffusion method such as the Floyd-Steinberg error diffusion method, the Jarvis-Judice-Ninke error diffusion method or the like. However, the disclosure is not limited thereto. In the present exemplary embodiment, the processor 110 may apply the aforementioned error diffusion matrices to the reference images 300(k) and 300(k+1) respectively. In terms of the above formulae (2) and (3), the error diffusion matrix of formula (2) includes weight values 7/21, 3/21, 5/21 and 1/21, and the error diffusion matrix of formula (3) includes the weight value 5/21.

In detail, first of all, since the reference pixel 302_1 (i.e., the next object to be analyzed) is located to the right of the reference pixel 301, the processor 110 judges that the reference pixel 302_1 has the greatest relevance to the reference pixel 301, and thus defines the weight value as 7/21, namely the highest weight value. Next, since the reference pixels 302_3 and 302_5 are located respectively right under the reference pixel 301 and at a position on the next reference image 300(k+1) that corresponds to the reference pixel 301, the processor 110 judges that the reference pixels 302_3 and 302_5 have the second greatest relevance to the reference pixel 301, and thus defines the weight value as 5/21, namely the second highest weight value. Finally, since the reference pixels 302_2 and 302_4 are located respectively to the lower left and to the lower right of the reference pixel 301, the processor 110 judges that the reference pixels 302_2 and 302_4 have less relevance to the reference pixel 301, and thus defines the weight values as 3/21 and 1/21 respectively. That is, the magnitude of the weight values is directly proportional to the relevance of the reference pixels 302_1 to 302_5 to the reference pixel 301. Moreover, in the present exemplary embodiment, the sum of these weight values is 1.

In an exemplary embodiment, if a reference pixel currently being analyzed is located at a boundary of the reference image 300(k), the reference image 300(k) has only three other reference pixels adjacent to this reference pixel, and the reference image 300(k+1) has only one other reference pixel adjacent to this reference pixel. That is, in this example, the processor 110 similarly establishes the error diffusion matrices described as above and only applies the corresponding weight values to the corresponding reference pixels. For example, the processor 110 only uses the weight values 7/21, 5/21 and 1/21 in the error diffusion matrix of formula (2) and the weight value 5/21 in the error diffusion matrix of formula (3) to adjust the corresponding reference pixels. However, the processor 110 does not use the weight value 3/21 in the error diffusion matrix of formula (2) as there is no reference pixel corresponding thereto. In addition, in another exemplary embodiment, if the reference pixel currently being analyzed is an initial reference pixel (e.g., the first pixel on the upper left corner of the reference image 300(1)), the processor 110 first directly presets a reference pixel value of this reference pixel as 1, and then analyzes and adjusts the neighboring reference pixels.

In the present exemplary embodiment, according to the reference pixel value X of the reference pixel 301, the pixel value X', and the aforementioned weight values, the processor 110 adjusts reference pixel values n1 to n5 of the reference pixels 302_1 to 302_n of the reference images 300(k) and 300(k+1). Therefore, in the present exemplary embodiment, the processor 110 adjusts the reference pixels 302_1 to 302_5 as shown by the following formula (4) to formula (8), so as to acquire adjusted reference pixel values n1' to n5' of the reference pixels 302_1 to 302_5.

$$n1' = n1 + (x - x') \times 7/21$$ ....................Formula (4)

$$n2' = n2 + (x - x') \times 3/21$$ ....................Formula (5)

$$n3' = n3 + (x - x') \times 5/21$$ ..........................Formula (6)

$$n4' = n4 + (x - x') \times 1/21$$ ..........................Formula (7)

$$n5' = n5 + (x - x') \times 5/21$$ ..........................Formula (8)

For example, in the present exemplary embodiment, assuming that the reference pixel value X of the reference pixel 301 of the reference image 300(k) is 0.5, the processor 110 defines the pixel value X' of the pixel 401 of the inkjet image 400(k) as 1 according to the above formula (1). Moreover, in the present exemplary embodiment, since the reference images 300(k) and 300(k+1) have the five reference pixels 302_1 to 302_5 adjacent to the reference pixel 301, the processor 110 establishes the error diffusion matrices as shown by the above formulae (2) and (3) to adjust the reference pixels 302_1 to 302_5. In the present exemplary embodiment, the processor 110 executes the operations as shown by the above formulae (4) to (8) to acquire the adjusted reference pixel values n1' to n5' of the reference pixels 302_1 to 302_5. Moreover, the processor 110 subsequently analyzes the reference pixel 302_1, so as to execute the operations as shown by the above formulae (1) to (8) to determine a pixel value of a pixel next to the pixel 401 of the inkjet image 400(k), and the processor 110 adjusts other five reference pixels adjacent to the reference pixel 302_1 in the same manner.

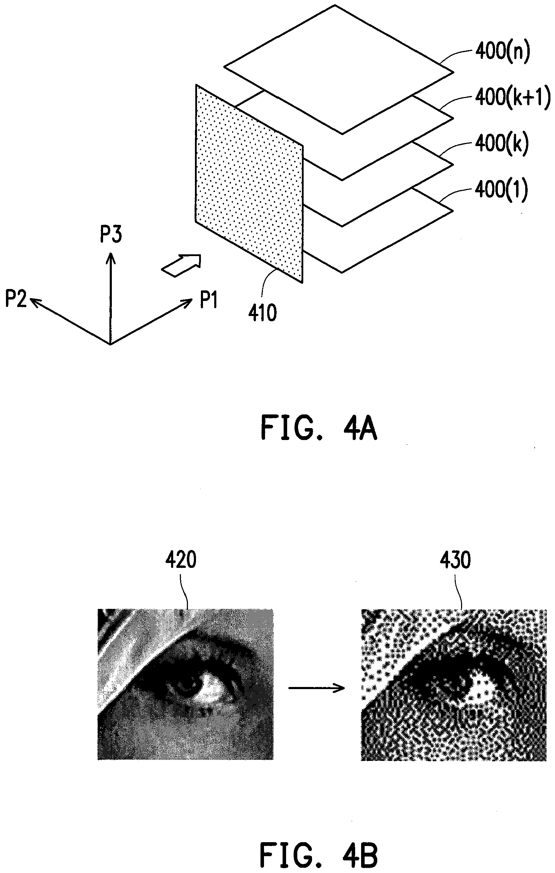

FIG. 4A is a schematic view of a plurality of inkjet images according to an exemplary embodiment. FIG. 4B is a schematic view showing that a reference image is converted into an inkjet image according to an exemplary embodiment. Referring to FIG. 2, FIG. 3A, FIG. 4A and FIG. 4B, after the processor 110 sequentially performs the aforementioned analysis and operations on each pixel of the reference images 300(1) to 300(n), the processor 110 generates the inkjet images 400(1) to 400(n) respectively corresponding to the reference images 300(1) to 300(n). That is, the processor 110 converts the reference images 300(1) to 300(n) having higher resolution into the inkjet images 400(1) to 400(n), wherein the inkjet images 400(1) to 400(n) are binary images. Moreover, an image 410 formed by overlapping the inkjet images 400(1) to 400(n) and shown on a side is also a binary image.

Referring to FIG. 4B, the reference image 300(n) on the top layer (upper surface of the three-dimensional model) in FIG. 3A or an image formed by overlapping the reference images 300(1) to 300(n) and shown on a side (side surface of the three-dimensional model) may be shown as an image 420. However, after the processor 110 performs the aforementioned analysis and operations on the reference images 300(1) to 300(n), the processor 110 generates the inkjet images 400(1) to 400(n). Thus, the inkjet image 400(n) or an image formed by overlapping the inkjet images 400(1) to 400(n) and shown on the side may be shown as an image 430. That is, the processor 110 drives the inkjet head 122 according to the inkjet images 400(1) to 400(n), so that the inkjet head 122 can perform an accurate inkjet operation on the three-dimensional printed object 20.

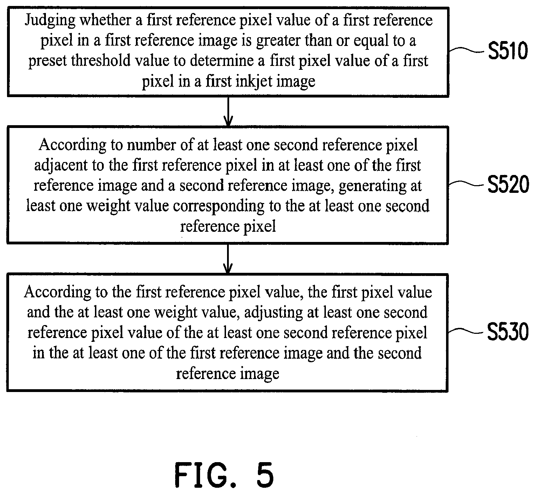

FIG. 5 is a flowchart of an inkjet method according to an exemplary embodiment. Referring to FIG. 1 and FIG. 5, the inkjet method according to the disclosure is at least applicable to the three-dimensional printing device 100 of the exemplary embodiment of FIG. 1. In step S510, the processor 110 judges whether a first reference pixel value of a first reference pixel in a first reference image is greater than or equal to a preset threshold value to determine a first pixel value of a first pixel in a first inkjet image. In step S520, according to number of at least one second reference pixel adjacent to the first reference pixel in at least one of the first reference image and a second reference image, the processor 110 generates at least one weight value corresponding to the at least one second reference pixel. In step S530, according to the first reference pixel value, the first pixel value and the at least one weight value, the processor 110 adjusts at least one second reference pixel value of the at least one second reference pixel in the at least one of the first reference image and the second reference image. Thus, after the processor 110 sequentially analyzes and adjusts each reference pixel of a plurality of reference images according to the above steps S510 to S530, the processor 110 generates a plurality of inkjet images corresponding to the reference images.

In summary, in the inkjet method and the three-dimensional printing device according to the disclosure, the reference pixel value of each reference pixel of a plurality of reference images is analyzed to define the corresponding pixel value in a plurality of inkjet images. Moreover, in the three-dimensional printing device according to the disclosure, the reference pixel values of other reference pixels adjacent to the reference pixel currently being analyzed can be adjusted by the error diffusion method, so that, when analyzing the next reference pixel, the three-dimensional printing device can accurately define the corresponding pixel value in the inkjet images. Accordingly, the three-dimensional printing device according to the disclosure is capable of accurately performing an inkjet operation on the three-dimensional printed object according to the inkjet images.

**Claims**

1. An inkjet method adapting to a three-dimensional printing device (100), the three-dimensional printing device (100) comprising a processor (110), a storage device (130) and an inkjet head (122), wherein the storage device (130) stores a first reference image (300(1), 300(k), 300(k+1), 300(n)) and a second reference image (300(1), 300(k), 300(k+1), 300(n)), and the first reference image (300(1), 300(k), 300(k+1), 300(n)) and the second reference image (300(1), 300(k), 300(k+1), 300(n)) are two adjacent layer images obtained by horizontally slicing a three-dimensional model, wherein the inkjet method comprises:

   judging whether a first reference pixel value (X) of a first reference pixel (301) in the first reference image (300(1), 300(k), 300(k+1), 300(n)) is greater than or equal to a preset threshold value to determine a first pixel value (X') of a first pixel (401) in a first inkjet image (400(1), 400(k), 400(k+1), 400(n)) by the processor (110);
   according to number of at least one second reference pixel (302_1, 302_2, 302_3, 302 4, 302 5) adjacent to the first reference pixel (301) in at least one of the first reference image (300(1), 300(k), 300(k+1), 300(n)) and the second reference image (300(1), 300(k), 300(k+1), 300(n)), generating at least one weight value corresponding to the at least one second reference pixel (302_1, 302_2, 302_3, 302_4, 302_5), by the processor (110); and
   according to the first reference pixel value (X), the first pixel value (X') and the at least one weight value, adjusting at least one second reference pixel value (n1, n2, n3, n4, n5) of the at least one second reference pixel (302_1, 302_2, 302_3, 302_4, 302_5) in the at least one of the first reference image (300(1), 300(k), 300(k+1), 300(n)) and the second reference image (300(1), 300(k), 300(k+1), 300(n)) by the processor (110).

2. The inkjet method according to claim 1, wherein the step of judging whether the first reference pixel value (X) of the first reference pixel (301) in the first reference image (300(1), 300(k), 300(k+1), 300(n)) is greater than or equal to the preset threshold value to determine the first pixel value (X') of the first pixel (401) in the first inkjet image (400(1), 400(k), 400(k+1), 400(n)) by the processor (110) comprises:

   if the first reference pixel value (X) is greater than or equal to the preset threshold value, determining the first pixel value (X') of the first pixel (401) in the first inkjet image (400(1), 400(k), 400(k+1), 400(n)) as 1 by the processor (110); and
   if the first reference pixel value (X) is smaller than the preset threshold value, determining the first pixel value (X') of the first pixel (401) in the first inkjet image (400(1), 400(k), 400(k+1), 400(n)) as 0 by the processor (110).

3. The inkjet method according to claim 2, further comprising:

   if the first pixel value (X') is 1, performing an inkjet operation on a position corresponding to the first pixel (401) on a three-dimensional printed object (20) by the inkjet head (122); and
   if the first pixel value (X') is 0, not performing the inkjet operation on the position corresponding to the first pixel (401) on the three-dimensional printed object (20) that by the inkjet head (122).

4. The inkjet method according to any one of the claims 1 to 3, wherein the step of generating the at least one weight value corresponding to the at least one second reference pixel (302_1, 302_2, 302_3, 302_4, 302_5) according to the number of the at least one second reference pixel (302_1, 302_2, 302_3, 302_4, 302_5) adjacent to the first reference pixel (301) in the at least one of the first reference image (300(1), 300(k), 300(k+1), 300(n)) and the second reference image (300(1), 300(k), 300(k+1), 300(n)) by the processor (110) comprises:

   establishing at least one error diffusion matrix of the at least one second reference pixel (302_1, 302_2, 302_3, 302_4, 302_5) adjacent to the first reference pixel (301) by the processor (110), the at least one error diffusion matrix comprising the at least one weight value.

5. The inkjet method according to any one of the claims 1 to 4, wherein a sum of the at least one weight value is 1.

6. The inkjet method according to any one of the claims 1 to 5, wherein a magnitude of the at least one weight value is directly proportional to relevance of the at least one second reference pixel (302_1, 302_2, 302_3, 302_4, 302_5) to the first reference pixel (301).

7. The inkjet method according to any one of the claims 1 to 6, wherein the step of according to the first reference pixel value (X), the first pixel value (X') and the at least one weight value, adjusting the at least one second reference pixel value (n1, n2, n3, n4, n5) of the at least one second reference pixel (302_1, 302_2, 302_3, 302_4, 302_5) in the at least one of the first reference image (300(1), 300(k), 300(k+1), 300(n)) and the second reference image (300(1), 300(k), 300(k+1), 300(n)) by the processor (110) comprises:

subtracting the first pixel value (X') from the first reference pixel value (X) to acquire an error value by the processor (110);
multiplying the error value by the at least one weight value corresponding to the at least one second reference pixel (302_1, 302_2, 302_3, 302_4, 302_5) to acquire an adjusted value by the processor (110); and
adding the adjusted value to the at least one second reference pixel value (n1, n2, n3, n4, n5), so as to adjust the at least one second reference pixel value (n1, n2, n3, n4, n5).

8. A three-dimensional printing device (100) comprising:

a storage device (130), configured to store a plurality of modules, a first reference image (300(1), 300(k), 300(k+1), 300(n)) and a second reference image (300(1), 300(k), 300(k+1), 300(n)), wherein the first reference image (300(1), 300(k), 300(k+1), 300(n)) and the second reference image (300(1), 300(k), 300(k+1), 300(n)) are two adjacent layer images obtained by horizontally slicing a three-dimensional model;
a processor (110), coupled to the storage device (130), and configured to execute the plurality of modules; and
an inkjet head (122), coupled to the processor (110), and configured to perform an inkjet operation on a three-dimensional printed object (20),
wherein the processor (110) judges whether a first reference pixel value (X) of a first reference pixel (301) in the first reference image (300(1), 300(k), 300(k+1), 300(n)) is greater than or equal to a preset threshold value to determine a first pixel value (X') of a first pixel (401) in a first inkjet image (400(1), 400(k), 400(k+1), 400(n)), wherein, according to number of at least one second reference pixel (302_1, 302_2, 302 3, 302 4, 302 5) adjacent to the first reference pixel (301) in at least one of the first reference image (300(1), 300(k), 300(k+1), 300(n)) and the second reference image (300(1), 300(k), 300(k+1), 300(n)), the processor (110) generates at least one weight value corresponding to the at least one second reference pixel (302_1, 302_2, 302_3, 302_4, 302_5),
wherein, according to the first reference pixel value (X), the first pixel value (X') and the at least one weight value, the processor (110) adjusts at least one second reference pixel value (n1, n2, n3, n4, n5) of the at least one second reference pixel (302_1, 302_2, 302_3, 302_4, 302_5) in the at least one of the first reference image (300(1), 300(k), 300(k+1), 300(n)) and the second reference image (300(1), 300(k), 300(k+1), 300(n)).

9. The three-dimensional printing device (100) according to claim 8, wherein, if the first reference pixel (301) is an initial reference pixel, the processor (110) presets the first reference pixel value (X) of the first reference pixel (301) as 1.

10. The three-dimensional printing device (100) according to claim 8 or 9, wherein the preset threshold value is 0.5.

11. The three-dimensional printing device (100) according to any one of the claims 8 to 10, wherein the first inkjet image (400(1), 400(k), 400(k+1), 400(n)) is a binary image, and the first pixel value (X') is 1 or 0.

12. The three-dimensional printing device (100) according to any one of the claims 8 to 11, wherein, if the first reference pixel value (X) is greater than or equal to the preset threshold value, the processor (110) determines the first pixel value (X') of the first pixel (401) in the first inkjet image (400(1), 400(k), 400(k+1), 400(n)) as 1, wherein, if the first reference pixel value (X) is smaller than the preset threshold value, the processor (110) determines the first pixel value (X') of the first pixel (401) in the first inkjet image (400(1), 400(k), 400(k+1), 400(n)) as 0.

13. The three-dimensional printing device (100) according to any one of the claims 8 to 12, wherein a magnitude of the at least one weight value is directly proportional to relevance of the at least one second reference pixel (302_1, 302_2, 302_3, 302_4, 302_5) to the first reference pixel (301).

14. The three-dimensional printing device (100) according to any one of the claims 8 to 13, wherein the processor (110) establishes at least one error diffusion matrix of the at least one second reference pixel (302_1, 302_2, 302_3, 302_4, 302_5) adjacent to the first reference pixel (301), the at least one error diffusion matrix comprising the at least one weight value.

**15.** The three-dimensional printing device (100) according to any one of the claims 8 to 14, wherein the processor (110) subtracts the first pixel value (X') from the first reference pixel value (X) to acquire an error value, and the processor (110) multiplies the error value by the at least one weight value corresponding to the at least one second reference pixel (302_1, 302_2, 302_3, 302_4, 302_5) to acquire an adjusted value, wherein the processor (110) adds the adjusted value to the at least one second reference pixel value (n1, n2, n3, n4, n5), so as to adjust the at least one second reference pixel value (n1, n2, n3, n4, n5).

FIG. 1

FIG. 2

FIG. 3A

FIG. 3B

401

| 1 | 1 | 0 | 1 | 0 | 1 |
|---|-----|---|---|---|---|
| 0 | 'X' |   |   |   |   |
|   |     |   |   |   |   |
|   |     |   |   |   |   |

400(k)

# FIG. 3C

400(n)

400(k+1)

400(k)

400(1)

P3

P2

P1

410

FIG. 4A

420

430

FIG. 4B

Judging whether a first reference pixel value of a first reference pixel in a first reference image is greater than or equal to a preset threshold value to determine a first pixel value of a first pixel in a first inkjet image ~— S510

According to number of at least one second reference pixel adjacent to the first reference pixel in at least one of the first reference image and a second reference image, generating at least one weight value corresponding to the at least one second reference pixel ~— S520

According to the first reference pixel value, the first pixel value and the at least one weight value, adjusting at least one second reference pixel value of the at least one second reference pixel in the at least one of the first reference image and the second reference image ~— S530

# FIG. 5

**EP 3 451 283 A1**

Europäisches Patentamt
European Patent Office
Office européen des brevets

# EUROPEAN SEARCH REPORT

Application Number

EP 18 15 4022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Qun Lou ET AL: "Fundamentals of 3D halftoning" In: "Medical image computing and computer-assisted intervention - MICCAI 2015 : 18th international conference, Munich, Germany, October 5-9, 2015; proceedings", 1 January 1998 (1998-01-01), Springer International Publishing, Cham 032548, XP055464631, ISSN: 0302-9743 ISBN: 978-3-642-38287-1 vol. 1375, pages 224-239, DOI: 10.1007/BFb0053273, * p. 316, 3rd paragraph, lines 1-3. p. 316, 3rd paragraph, lines 3-6. reference [6]. * ----- | 1-15 | INV. G06T5/20 H04N1/405 |
| X | PETER STUCKI: "3D halftoning", PROCEEDINGS OPTICAL DIAGNOSTICS OF LIVING CELLS II, vol. 2949, 7 February 1997 (1997-02-07), pages 314-317, XP055477305, US ISSN: 0277-786X, DOI: 10.1117/12.266339 ISBN: 978-1-5106-1723-0 * p. 230, Section 4, 2nd paragraph until p. 231, lines 1-2. p. 232, 2nd paragraph and the corresponding error diffusion filters in Fig. 8. * ----- -/-- | 1-15 | TECHNICAL FIELDS SEARCHED (IPC) G06T H04N |

The present search report has been drawn up for all claims

| Place of search | Date of completion of the search | Examiner |
|---|---|---|
| Munich | 23 May 2018 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

15

Europäisches Patentamt

European Patent Office

Office européen des brevets

## EUROPEAN SEARCH REPORT

Application Number

EP 18 15 4022

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DEEPAK SHARMA ET AL: "An Approach to Digital Halftone Processing Using Error Diffusion in Forward and Backward Direction", INTERNATIONAL JOURNAL OF ADVANCED RESEARCH IN COMPUTER SCIENCE AND SOFTWARE ENGINEERING, vol. 3, no. 6, 6 June 2013 (2013-06-06), XP055477293, * p. 827, 1st paragraph, lines 2-8. * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 23 May 2018 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)